# EUROPÄISCHE PATENTSCHRIFT

(11) **EP 1 525 083 B1**
(45) Veröffentlichungstag und Bekanntmachung des Hinweises auf die Patenterteilung: **14.12.2005**
(21) Anmeldenummer: 03770981.3
(22) Anmeldetag: 16.07.2003
(51) Int. Cl.: B29C 47/88, B29C 47/92

(54) **WASSERSTANDSREGELUNG FÜR DIE KÜHLEINRICHTUNG EINER EXTRUSIONSANLAGE**
WATER LEVEL REGULATION FOR THE COOLING INSTALLATION OF AN EXTRUSION LINE
REGULATION DE NIVEAU D'EAU POUR LE SYSTEME DE REFROIDISSEMENT D'UNE INSTALLATION D'EXTRUSION

(30) Priorität: 26.07.2002 AT 11412002
(43) Veröffentlichungstag der Anmeldung: 27.04.2005
(73) Patentinhaber: Greiner Extrusionstechnik GmbH, 4550 Kremsmünster (AT)
(72) Erfinder: KÖSSL, Reinhold, A-4552 Wartberg/Krems (AT)
(74) Vertreter: Secklehner, Günter
(86) Internationale Anmeldenummer: PCT/AT2003/000199
(87) Internationale Veröffentlichungsnummer: WO 2004/011227

(56) Entgegenhaltungen:
- DE-C- 10 109 958
- GB-A- 1 154 259
- US-A- 5 505 058

## Beschreibung

Die Erfindung bezieht sich auf eine Kühleinrichtung für eine Extrusionsanlage mit zumindest einer Kühlkammer, die einen Innenraum umgrenzt und zur Aufnahme einer Kühlflüssigkeit ausgebildet ist, die einen ersten Kühlmittelspiegel bildet und in deren Innenraum gegebenenfalls mindestens eine Kaliberblende angeordnet ist, die mindestens einen Durchbruch zum Hindurchführen mindestens eines länglichen Gegenstandes aufweist, mit mindestens je einer Zu- und Abfuhröffnung für die Kühlflüssigkeit, die in den Innenraum münden und mit mindestens je einer Zu- und Ableitung in Strömungsverbindung stehen, wobei mindestens eine Abfuhröffnung auf dem Niveau des Kühlmittelspiegels angeordnet ist, mit einer Absaugöffnung, die oberhalb des Kühlmittelspiegels in einen kühlmittelfreien Zwischenraum des Innenraums der Kühlkammer mündet und über die der Zwischenraum auf einen gegenüber dem äußeren Atmosphärendruck (P_{A}) geringeren Druck (P_{U}) absenkbar ist, mit einem Auffangbehälter für die Kühlflüssigkeit, der über die Ableitung und die Abfuhröffnung mit dem kühlmittelfreien Zwischenraum verbunden ist, und die Kühlflüssigkeit im Auffangbehälter einen unterhalb des ersten Kühlmittelspiegels in der Kühlkammer angeordneten weiteren Kühlmittelspiegel ausbildet, wobei die Ableitung unterhalb des weiteren Kühlmittelspiegels endet, und die Kühlflüssigkeit in der Ableitung in Abhängigkeit der Differenz der beiden auf die jeweiligen Kühlmittelspiegel ausgeübten Drücke (ΔP) eine Kühlflüssigkeitssäule ausbildet.

Eine gekühlte Kalibriervorrichtung für eine Extrusionsanlage ist aus der DE 101 09 958 C1 bekannt geworden, die ein eine Kühlflüssigkeit aufnehmendes Gehäuse, durch das ein Kunststoffprofil gefördert und dabei von der Kühlflüssigkeit gekühlt wird, umfasst. In dem Gehäuse sind Kalibrierführungen, durch die das Kunststoffprofil hindurchläuft, angeordnet. Über Zu- und Abfuhröffnungen und daran angeschlossenen Leitungen erfolgt die Zu- und Abfuhr des Kühlmittels bzw. der Kühlflüssigkeit in den bzw. aus dem Innenraum des Gehäuses. Das Niveau der Kühlflüssigkeit ist oberhalb des Scheitels des zu kalibrierenden Kunststoffprofils angeordnet und so eingestellt, dass ein flüssigkeitsfreier, luftgefüllter Bereich oberhalb des Niveaus der Kühlflüssigkeit verbleibt. In diesem flüssigkeitsfreien Bereich mündet eine Luftabsaugöffhung, über die ein Differenzdruck gegenüber dem äußeren atmosphärischen Luftdruck herstellbar ist. Die Abfuhröffnung ist auf dem Niveau der Kühlflüssigkeit angeordnet und mündet über die Ableitung in einen Kühlflüssigkeitsvorratsbehälter, der unterhalb des Niveaus des ersten Kühlmittelspiegels angeordnet ist. In der Abfuhrleitung bildet sich entsprechend der aufgebauten Druckdifferenz eine Flüssigkeitssäule aus. Dabei ist der maximale aufbaubare Druckunterschied im kühlmittelfreien Zwischenraum der Kühlkammer und dem äußeren Atmosphärendruck durch die Höhendifferenz zwischen den beiden Kühlmittelspiegeln festgelegt. Nachteilig dabei ist, dass aufgrund der baulichen Gegebenheiten nur ein Druckunterschied in geringen Grenzen aufbaubar war.

Bei weiteren bisher bekannten Extrusionsanlagen wurde eine Vielzahl von Vakuumpumpen zur Erzeugung des jeweiligen Unterdruckes bei den einzelnen Kalibrierwerkzeugen sowie Unterdrucktanks eingesetzt. Jede dieser Vakuumpumpen erzeugte den ihrer Leistung entsprechenden Unterdruck und es erfolgte die Einstellung des benötigten Unterdruckes durch Zufuhr von sogenannter Falschluft, welche aus der Umgebung mit angesaugt wurde. Weiters war die nahezu vollständige Trennung des mit der Vielzahl von Vakuumpumpen angesaugten Gemisches sehr aufwendig und es war ein wirtschaftlicher und kostengünstiger Betrieb der gesamten Anlage nur schwer zu realisieren.

Der vorliegenden Erfindung liegt daher die Aufgabe zugrunde, eine Kühleinrichtung zu schaffen, die es ermöglicht, bei begrenzten baulichen Höhendifferenzen zwischen den Kühlmittelspiegeln eine höhere Druckdifferenz zwischen dem kühlmittelfreien Zwischenraum in der Kühlkammer und dem äußeren Atmosphärendruck zu erzielen.

Diese Aufgabe der Erfindung wird dadurch gelöst, dass in einem Abfuhrbereich der Kühlflüssigkeit eine Vorrichtung zur Erzeugung eines Unterdruckes angeordnet ist. Der sich dadurch ergebende überraschende Vorteil liegt darin, dass nun nahezu unabhängig von den baulich begrenzten Höhendifferenzen zwischen den beiden Kühlmittelspiegeln bei einem drucklosen Überlaufen der Kühlflüssigkeit aus dem Innenraum trotzdem eine vorbestimmbare höhere Druckdifferenz zwischen dem kühlmittelfreien Zwischenraum in der Kühlkammer und dem äußeren Atmosphärendruck aufgebaut werden kann. Damit wird als weiterer Vorteil die ansonst notwendige aufwendige Trennung des Luft- und Kühlflüssigkeitsgemisches vermieden, die sehr anlagenaufwendig sowie energieintensiv war.

Vorteilhaft ist auch eine weitere Ausführungsform nach Anspruch 2 oder 3, da dadurch unter Verwendung des gleichen Mediums ein höherer Differenzdruck aufbaubar ist, und so die dabei eingesetzte höhere Energie zum Aufbau des höheren Differenzdruckes die Nachteile bei der ansonst üblichen Trennung des Luft- und Kühlmittelgemisches vermeidet.

Vorteilhaft ist weiters eine Ausbildung nach Anspruch 4 oder 5, da durch die zusätzliche Absenkung des Druckes im Innenraum des Auffangbehälters in Abhängigkeit von der Höhendifferenz zwischen den beiden Kühlmittelspiegeln im Bereich der Kühlkammer auf den abzukühlenden Gegenstand wiederum eine höhere Druckdifferenz zwischen dem äußeren Umgebungsdruck und der der Kühlkammer zugewendeten äußeren Oberfläche desselben aufbaubar ist.

Durch die Ausbildung nach den Ansprüchen 6 und 7 kann durch die Ermittlung der Höhe der Kühlflüssigkeitssäule im Zusammenwirken mit der Steuereinrichtung die Vorrichtung zur Erzeugung des Unterdruckes je nach Bedarf angesteuert werden, wodurch die Kühlflüssigkeitssäule stets auf einer vorbestimmbaren Höhe bzw. einem Höhenbereich innerhalb der Ableitung gehalten werden kann. Dadurch sind wiederum bei geringen baulichen Höhendif ferenzen zwischen den Kühlmittelspiegeln höhere Druckdifferenzen zwischen dem kühlmittelfreien Zwischenraum und den äußeren atmosphärischen Umgebungsbedingungen in gleichbleibender Stabilität erzielbar.

Möglich ist aber auch eine Ausbildung nach Anspruch 8, da dadurch der Gegenstand über seinen gesamten Querschnitt gleichmäßig gekühlt und damit aber auch eine raschere Wärmeabfuhr aus diesem erzielbar ist.

Durch die Ausbildung nach Anspruch 9 ist es möglich, zwischen den einzelnen hintereinander angeordneten Bereichen im Innenraum der Kühlkammer eine stetige Zunahme des Unterdruckes, ausgehend vom Eintrittsbereich hin zum Austrittsbereich aufzubauen und so den Gegenstand während seinem Durchtritt durch die Kühlkammer in Abhängigkeit von seiner Verfestigung jeweils dem dazu entsprechenden Unterdruck auszusetzen, um so ein Aufblähen desselben zu vermeiden, wodurch hohe Fertigungsgenauigkeiten erzielbar sind. Weiters kann durch die Anordnung der Durchströmöffnungen unterhalb des Kühlmittelspiegels zusätzlich noch eine gerichtete Strömung in bezug zur Oberfläche des Gegenstandes aufgebaut werden, wobei in bekannter Weise turbulente Strömungen aufgebaut werden können, welche eine höhere Wärmeabfuhr aus dem Gegenstand hin zur Kühlflüssigkeit bewirken.

Schließlich ist aber auch eine Ausbildung wie im Anspruch 10 beschrieben möglich, da dadurch stets eine Kontrolle des Aufbaus der Kühlflüssigkeitssäule innerhalb der Ableitung möglich ist und aufgrund dessen die Vorrichtung zur Erzeugung des Unterdruckes im Abfuhrbereich entsprechend nachjustiert werden kann, wodurch der im kühlmittelfreien Zwischenraum aufbaubare Druck exakt festlegbar ist.

Die Erfindung wird im nachfolgenden anhand der in den Zeichnungen dargestellten Ausführungsbeispiele näher erläutert.

Es zeigen:
- Fig. 1: eine Extrusionsanlage mit einer Kühleinrichtung sowie einer dieser zugeordneten erfindungsgemäßen Vorrichtung zur Erhöhung des Unterdruckes im Abfuhrbe- reich, in Seitenansicht, teilweise geschnitten und schematisch vereinfachter Dar- stellung;
- Fig. 2: die Kühleinrichtung mit der erfindungsgemäßen Vorrichtung zur Erhöhung des Unterdruckes nach Fig. 1 in Seitenansicht sowie in schematisch vereinfachter, phantombildlicher Darstellung;
- Fig. 3: einen Teilbereich der Kühleinrichtung im Bereich des Auffangbehälters mit einer anderen Ausbildung der Vorrichtung zur Erhöhung des Unterdruckes in Seitenan- sicht sowie in schematisch stark vereinfachter Darstellung;
- Fig. 4: einen Teilbereich der Kühleinrichtung im Bereich des Auffangbehälters mit einer anderen Ausbildung der Vorrichtung zur Erhöhung des Unterdruckes in Seitenan- sicht sowie in schematisch stark vereinfachter Darstellung;
- Fig. 5: einen Teilbereich der Kühlkammer, in Ansicht geschnitten sowie in schematisch stark vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

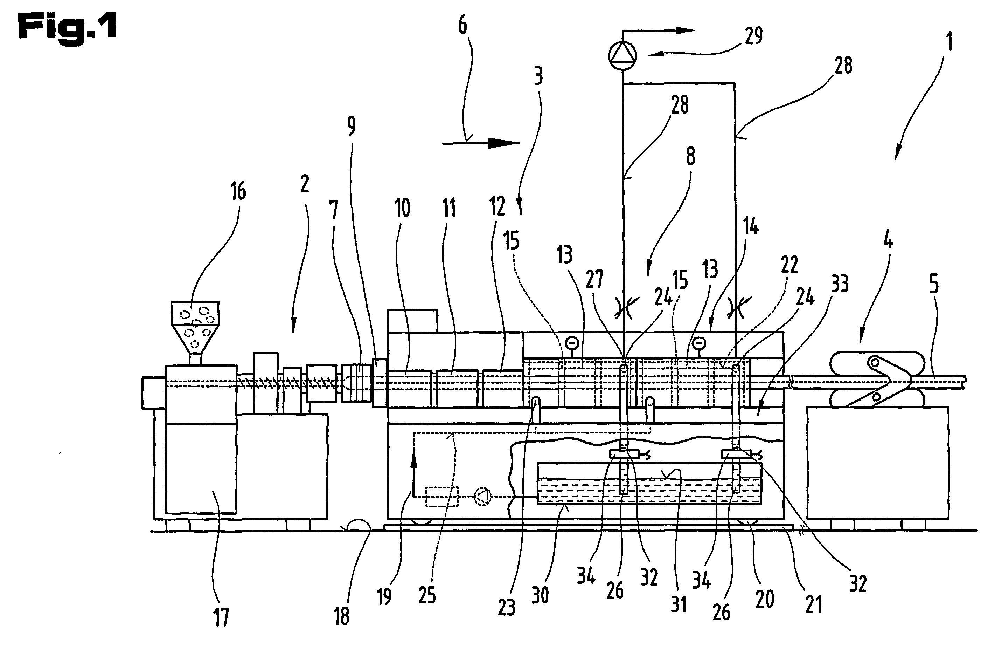

In der Fig. 1 ist eine Extrusionsanlage 1 gezeigt, die aus einem Extruder 2, einer diesem nachgeordneten Formgebungseinrichtung 3 sowie einem dieser nachgeordneten Raupenabzug 4 für einen extrudierten Gegenstand 5 besteht. Der Raupenabzug 4 dient dazu, um den oder die Gegenstände 5, beispielsweise ein Profil, insbesondere ein Hohlprofil aus Kunststoff, für den Fenster- und/oder Türenbau, in Extrusionsrichtung 6, ausgehend vom Extruder 2, durch die gesamte Formgebungseinrichtung 3 abzuziehen. Die Formgebungseinrichtung 3 besteht bei diesem Ausführungsbeispiel aus einem dem Extruder 2 zugeordneten Extrusionswerkzeug 7, wie z.B. einer Extrusionsdüse, einer Kalibriervorrichtung 8 aus mindestens einem, bevorzugt jedoch mehreren Kalibrierwerkzeugen 9 bis 12 und zumindest einer, bevorzugt jedoch mehreren Kühlkammern 13 einer Kühleinrichtung 14, in welchen gegebenenfalls mehrere Kaliberplatten bzw. Kaliberblenden 15 angeordnet sind. Einzelne Kaliberblenden 15 können aber auch nur zur Stützfunktion als Stützblenden für den Gegenstand 5 ausgebildet sein.

Im Bereich des Extruders 2 befindet sich ein Aufnahmebehälter 16, in welchem ein Material, wie beispielsweise ein Gemisch bzw. ein Granulat zur Bildung eines Kunststoffes, bevorratet ist, welches mit zumindest einer Förderschnecke im Extruder 2 dem Extrusionswerkzeug 7 zugeführt wird. Weiters umfasst der Extruder 2 noch eine Plastifiziereinheit, durch welche während des Durchtretens des Materials durch diese mittels der Förderschnecke sowie gegebenenfalls zusätzlicher Heizeinrichtungen das Material gemäß den diesem innewohnenden Eigenschaften, unter Druck und gegebenenfalls Zufuhr von Wärme erwärmt und plastifiziert sowie in Richtung des Extrusionswerkzeuges 7 gefördert wird. Vor dem Eintritt in das Extrusionswerkzeug 7 wird der Massestrom aus dem plastifizierten Material in Übergangszonen hin zum gewünschten Profilquerschnitt geführt.

Das Extrusionswerkzeug 7, die Plastifiziereinheit und der Aufnahmebehälter 16 sind auf einem Maschinenbett 17 abgestützt bzw. gehaltert, wobei das Maschinenbett 17 auf einer ebenen Aufstandsfläche 18, wie beispielsweise einem ebenen Hallenboden, aufgestellt ist.

Die gesamte Kalibriervorrichtung 8 ist bei diesem Ausführungsbeispiel auf einem Kalibriertisch 19 angeordnet bzw. gehaltert, wobei sich der Kalibriertisch 19 über Laufrollen 20 auf der Aufstandsfläche 18 befestigten Fahrschienen 21 abstützt. Diese Lagerung des Kalibriertisches 19 über die Laufrollen 20 dient dazu, um den gesamten Kalibriertisch 19 mit den darauf angeordneten Ein- bzw. Vorrichtungen in Extrusionsrichtung 6 - gemäß eingetragenem Pfeil - vom bzw. hin zum Extrusionswerkzeug 7 verfahren zu können. Um diese Verstellbewegung leichter und genauer durchführen zu können, ist dem Kalibriertisch 19 beispielsweise ein nicht näher dargestellter Verfahrantrieb zugeordnet, der eine gezielte und gesteuerte Längsbewegung des Kalibriertisches 19 hin zum Extruder 2 oder vom Extruder 2 weg ermöglicht. Für den Antrieb und die Steuerung dieses Verfahrantriebes können jegliche aus dem Stand der Technik bekannte Lösungen und Aggregate verwendet werden.

Die Kalibrierwerkzeuge 9 bis 12 der Kalibriervorrichtung 8 können auf einer Aufnahmeplatte abgestützt und beispielsweise als Vakuumkalibrierung ausgebildet sein, wobei die Kalibrierung des zu extrudierten Gegenstandes 5 innerhalb der einzelnen Formgebungs- bzw. Kalibrierwerkzeuge 9 bis 12 erfolgt. Zusätzlich kann die Anordnung der Vakuumschlitze, der Kühlabschnitte und der Strömungskanäle bzw. Kühlbohrungen sowie deren Anschlüsse und Versorgung gemäß dem bekannten Stand der Technik erfolgen.

Diese Kalibrierung kann beispielsweise eine Kombination aus Trocken- und Naßkalibrierung bzw. nur eine vollständige Trockenkalibrierung umfassen. Weiters kann auch ein Zutritt von Umgebungsluft, zumindest zwischen dem Extrusionswerkzeug 7 und dem ersten Kalibrierwerkzeug 9 und/oder zumindest zwischen dem ersten Kalibrierwerkzeug 9 und weiteren Kalibrierwerkzeugen 10 bis 12, vollständig verhindert werden. Selbstverständlich ist es aber auch möglich, zumindest bereichsweise zwischen den einzelnen Kalibrierwerkzeugen 9 bis 12 einen Zutritt von Umgebungsluft hin zum Gegenstand 5 zu ermöglichen bzw. Wasserbäder anzuordnen.

Die Kühlkammer 13 der Kühleinrichtung 14 für den aus den Kalibrierwerkzeugen 9 bis 12 austretenden Gegenstand 5 ist durch zumindest ein vereinfacht dargestelltes Gehäuse gebildet, welches durch die in seinem Innenraum angeordneten und vereinfacht dargestellten Kaliberblenden 15 in unmittelbar aufeinanderfolgende Bereiche unterteilt ist. Bei der Kalibrierung von Hohlprofilen ist der Innenraum der Kühlkammer 13 auf einen gegenüber dem atmosphärischen Luftdruck (P_{A}) geringeren Druck (P_{U}) abgesenkt und stellt so einen Unterdrucktank dar.

Der Gegenstand 5 weist nach dem Austritt aus dem Extrusionswerkzeug 7 eine durch dieses vorgegebene Querschnittsform auf, welche in den daran anschließenden Kalibrierwerkzeugen 9 bis 12 ausreichend kalibriert und/oder gekühlt wird, bis der zähplastische Gegenstand 5 oberflächlich bzw. Randbereiche desselben soweit abgekühlt sind, dass seine Außenform stabil sowie in ihren Abmessungen entsprechend ausgebildet ist. Anschließend an die Kalibrierwerkzeuge 9 bis 12 durchläuft der Gegenstand 5 die Kühlkammern 13, um eine weitere Abkühlung und gegebenenfalls Kalibrierung sowie Abstützung zu erreichen und so die noch im Gegenstand 5 enthaltene Restwärme abzuführen. Nach dem Austritt weist der Gegenstand 5 zumindest im Bereich seiner äußeren Oberfläche in etwa Umgebungstemperatur, wie z.B. 15° C bis 25° C, auf.

Für den Betrieb der Extrusionsanlage 1, insbesondere den am Kalibriertisch 19 angeordneten bzw. gehalterten Ein- bzw. Vorrichtungen sind diese mit einer nicht näher dargestellten Versorgungseinrichtung verbindbar, mit welcher die unterschiedlichsten Aggregate, beispielsweise mit einem flüssigen Kühlmedium, mit elektrischer Energie, mit Druckluft sowie mit einem Vakuum, beaufschlagt werden können. Die unterschiedlichsten Energieträger können je nach Bedarf frei gewählt und eingesetzt werden.

Zum Hindurchführen des Gegenstandes 5 durch die einzelnen Kaliberblenden 15 weisen diese zumindest einen Durchbruch auf, wobei einzelne Formflächen des Durchbruchs zumindest bereichsweise einen äußeren Profilquerschnitt des hindurchführbaren Gegenstandes 5 begrenzen bzw. umgrenzen. Wie bereits zuvor beschrieben, ist der Innenraum der Kühlkammer 13 zur Aufnahme des Kühlmittels, insbesondere einer Kühlflüssigkeit, ausgebildet, welches darin einen vereinfacht dargestellten ersten Kühlmittelspiegel 22 ausbildet. Dieser Kühlmittelspiegel 22 ist in bezug zum hindurchführbaren Gegenstand 5 derart gewählt, dass in vertikaler Richtung die höchste Begrenzende des länglichen Gegenstandes 5 in etwa gleich dem Kühlmittelspiegel 22 ist, bevorzugt jedoch der Kühlmittelspiegel 22 höher gewählt ist, als die höchste Begrenzende des länglichen Gegenstandes 5. Dadurch ist der hindurchführbare Gegenstand 5 allseitig im Bereich seiner äußeren Oberfläche von der Kühlflüssigkeit umgeben. Selbstverständlich ist es aber auch möglich, nur einen Teilbereich bzw. eine Teilhöhe des Gegenstandes 5 in der Kühlflüssigkeit zu kühlen und den Kühlmittelspiegel 22 unterhalb der höchsten Begrenzenden des länglichen Gegenstandes 5 anzuordnen. Dies ist vom gewählten Verfahrensablauf während der Kühlphase abhängig.

Vereinfacht dargestellte Zu- bzw. Abfuhröffnungen 23, 24 für die Kühlflüssigkeit münden in den Innenraum der Kühlkammern 13 und stehen weiters mit mindestens je einer Zu- sowie Ableitung 25, 26 in Strömungsverbindung. Dabei ist mindestens eine Abfuhröffnung 24 für die Kühlflüssigkeit auf dem Niveau des Kühlmittelspiegels 22 in den Kühlkammern 13 angeordnet. Selbstverständlich ist es möglich, jeder der einzelnen Kühlkammern 13 je eine eigene Zu- und Abfuhröffnung 23, 24 zuzuordnen, wobei beispielsweise auch in jeder der Kühlkammern 13 ein eigener Kühlmittelspiegel 22 unabhängig voneinander ausgebildet werden kann. Weiters ist noch vereinfacht dargestellt, dass den Kühlkammern 13 jeweils zumindest eine Absaugöffnung 27 zugeordnet ist, die oberhalb des Kühlmittelspiegels 22 in einen kühlmittelfreien Zwischenraum des Innenraums der bzw. den Kühlkammern 13 einmündet und über die der Zwischenraum auf einen gegenüber dem äußeren Atmosphärendruck (P_{A}) geringeren Druck (P_{U}) absenkbar ist.

Dazu steht die Absaugöffnung 27 über eine vereinfacht dargestellte Saugleitung 28 mit einem Unterdruckerzeuger 29, wie beispielsweise einer Vakuumpumpe oder dgl., in Verbindung, wobei es zusätzlich noch möglich ist, in einer oder auch beiden Saugleitungen 28 ein Drossel- bzw. variables Absperrorgan vorzusehen, um so bei Verwendung eines einzigen Unterdruckerzeugers 29 den Unterdruck in jeder der einzelnen Kühlkammern 13 getrennt und unabhängig voneinander einstellen zu können. Die Ableitungen 26 aus den Kühlkammern 13 münden in einen vereinfacht dargestellten Auffangbehälter 30, durch welche die Kühlflüssigkeit aus diesen drucklos abgeleitet wird bzw. überläuft. Dazu steht die Abfuhröffnung 24 über die Ableitung 26 mit dem kühlmittelfreien Zwischenraum in den Kühlkammern 13 in Verbindung, wobei die Kühlflüssigkeit im Auffangbehälter einen unterhalb des ersten Kühlmittelspiegels 22 in den Kühlkammern 13 angeordneten, weiteren Kühlmittelspiegel 31 ausbildet. Die Ableitung 26 bzw. Ableitungen 26 münden stets unterhalb des weiteren Kühlmittelspiegels 31 in den Auffangbehälter 30, wodurch die Kühlflüssigkeit in der oder den Ableitungen 26 in Abhängigkeit der Differenz der beiden auf die jeweiligen Kühlmittelspiegel 22, 31 ausgeübten Drücke (Δ P) eine Kühlflüssigkeitssäule 32 ausbildet. Je nach Bauart des Kalibriertisches 19, insbesondere der möglichen erreichbaren Höhendifferenz zwischen den beiden Kühlmittelspiegeln 22, 31 ist physikalisch bedingt, der im kühlmittelfreien Zwischenraum aufbaubare geringere Druck (P_{U}) festgelegt. So kann beispielsweise bei einer Höhendifferenz zwischen den beiden hühlmittelspiegeln 22, 31 von 1,0 m der Druck (P_{U}) in kühlmittelfreien Zwischenraum um maximal 100 mbar gegenüber dem äußeren Luftdruck abgesenkt werden. Bei einer derartig beschriebenen Druckdifferenz steigt die Kühlflüssigkeitssäule 32 in der Ableitung 26 bis an die Abfuhröffnung 24 an, wodurch das ansonst drucklose Überlaufen der Kühlflüssigkeit hin zum Auffangbehälter 30 begrenzt ist. Wird der Unterdruck im Zwischenraum weiter erhöht, saugt dieser die Kühlflüssigkeit aus dem Auffangbehälter 30 in die Kühlkammer 13 durch die Ableitung 26 zurück.

Wie bereits zuvor beschrieben, ist somit der im kühlmittelfreien Zwischenraum aufbaubare, geringere Druck (P_{U}) für ein druckloses Überlaufen der Kühlflüssigkeit von der Abfuhröffnung 24 hin zum Auffangbehälter 30 lediglich durch die Höhendifferenz zwischen den beiden Kühlmittelspiegeln 22 bzw. 31 begrenzt.

Ist eine höhere Druckdifferenz (ΔP) zwischen dem Atmosphärendruck (P_{A}) und dem geringen Druck (P_{U}) im kühlmittelfreien Zwischenraum gewünscht, ist im Abfuhrbereich 33 der Kühlflüssigkeit mindestens eine, bevorzugt mehrere Vorrichtungen 34 zur Erzeugung eines Unterdrucks anzuordnen, welche im vorliegenden Ausführungsbeispiel im Bereich der Ableitungen 26 vereinfacht dargestellt worden sind. Die detaillierte Beschreibung dieser Vorrichtung 34 wird in den nachfolgenden Fig. erfolgen.

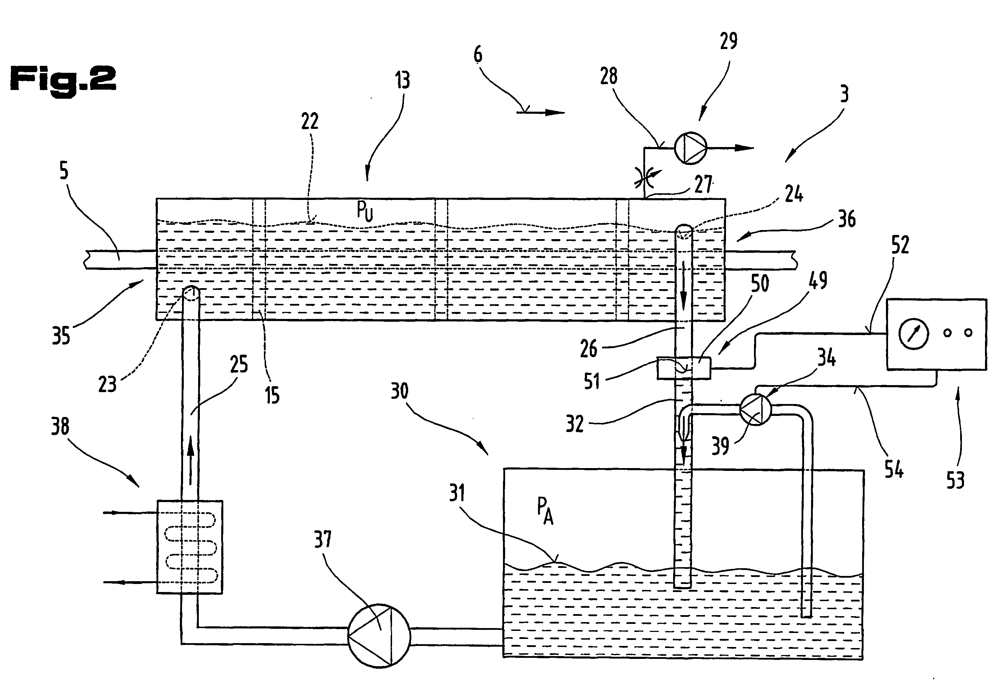

In der Fig. 2 ist die Kühlkammer 13 der Formgebungseinrichtung 3 sowie der Auffangbehälter 30 in vergrößertem Maßstab gegenüber der Fig. 1 vereinfacht dargestellt, wobei für gleiche Teile gleiche Bauteilbezeichnungen bzw. Bezugszeichen, wie in der Fig. 1 verwendet werden. Gleichfalls wird, um unnötige Wiederholungen zu vermeiden, auf die detaillierte Beschreibung in der vorangegangenen Fig. 1 hingewiesen bzw. bezug genommen.

Hier ist aus Übersichtlichkeitsgründen lediglich eine der Kühlkammern 13, in Art eines Phantombildes dargestellt, wobei für die Sichtbarkeit nur die Umrisse der Kühlkammer 13 und die Wände durchsichtig dargestellt worden sind. Im Innenraum der KühIkammer 13 sind zwischen einem Eintritts- und Austrittsbereich 35, 36 des hindurchführbaren Gegenstandes 5 mehrere Kalibrierblenden 15 zueinander in Extrusionsrichtung 6 distanziert angeordnet, welche in bekannter Weise zumindest einen Durchbruch bzw. Öffnung aufweisen, durch welche der Gegenstand 5 während seiner Abkühlung in der Kühlkammer 13 hindurchführbar ist. Bei gleicher Durchfuhrrichtung der Kühlflüssigkeit in bezug zur Extrusionsrichtung 6 mündet die Zufuhröffnung 23 nahe dem Eintrittsbereich 35 des Gegenstandes 5 in den Innenraum der Kühlkammer 13. Die Abfuhröffnung 24 ist dem Austrittsbereich 36 des Gegenstandes 5 aus der Kühlkammer 13 benachbart angeordnet, wobei der durch die Kühlflüssigkeit im Innenraum ausgebildete Kühlmittelspiegel 22 entsprechend den Querschnittsabmessungen des hindurchführbaren Gegenstandes in bezug zu dessen obersten Begrenzenden gewählt wird, wie dies bereits zuvor detailliert beschrieben worden ist. Die Abfuhröffnung 24 ist in bezug zum Gegenstand 5 derart in der Kühlkammer 13 angeordnet, dass der Kühlmittelspiegel 22 zumindest in gleicher Höhe mit der obersten Begrenzenden des Gegenstandes bevorzugt jedoch oberhalb dieser in der Kühlkammer 13 ausgebildet ist. Die Abfuhröffnung 24 steht über die Ableitung 26 mit dem Auffangbehälter 30, welcher vertikal gesehen unterhalb der Kühlkammer 13 angeordnet ist, in Strömungsverbindung und mündet unterhalb des weiteren Kühlmittelspiegels 31 in denselben ein.

Befindet sich die Kühlkammer 13 in ihrem bestimmungsgemäßen Einsatz, bei welchem der Gegenstand 5 diese fortlaufend durchschreitet, wird über die Zuleitung 25 und die Zufuhröffnung 23 mittels einer vereinfacht dargestellten Pumpe 37 die Kühlflüssigkeit aus dem Auffangbehälter 30 abgeführt und wiederum dem Innenraum der Kühlkammer 13 zugeleitet. Damit kann ein geschlossener Kreislauf der Kühlflüssigkeit, bis auf die Ergänzung von Leckverlusten, erzielt werden. Weiters ist hier noch vereinfacht dargestellt, dass in der Zuleitung 25 eine Kühlvorrichtung 38 vorgesehen sein kann, durch welche der Kühlflüssigkeit bzw. dem Kühlmittel eine vorbestimmbare Wärmemenge entzogen werden kann, bevor dieses dem Innenraum der Kühlkammer 13 zugeleitet wird. Oberhalb des Kühlmittelspiegels 22 in der Kühlkammer 13 ist der zuvor bereits beschriebene kühlmittelfreie Zwischenraum ausgebildet, welcher über die Absaugöffnung 27 sowie die Saugleitung 28 mit zumindest einem Unterdruckerzeuger 29 in Verbindung steht, wodurch dieser kühlmittelfreie Zwischenraum auf einen gegenüber dem äußeren Atmosphärendruck (P_{A}) geringen Druck (P_{U}) abgesenkt werden kann. Selbstverständlich ist es aber auch möglich, keinen sogenannten geschlossen Kreislauf der Kühlflüssigkeit für die Kühlung des Gegenstandes 5 einzusetzen und stets frische Kühlflüssigkeit dem Innenraum zuzuleiten.

Im Bereich des Auffangbehälters 30 wirkt bei diesem Ausführungsbeispiel der äußere Atmosphärendruck (P_{A}) auf den weiteren Kühlmittelspiegel 31, wodurch die über die Zufuhröffnung 23 zugeführte Kühlflüssigkeit drucklos in die Ableitung 26 abläuft und in dieser die zuvor beschriebene Kühlflüssigkeitssäule 32 in Abhängigkeit der Höhendifferenz zwischen den beiden Kühlmittelspiegeln 22, 31 sowie der Höhendifferenz zwischen dem Ende der Ableitung 26 und dem weiteren Kühlmittelspiegel 31 sowie der Druckdifferenz (ΔP) zwischen dem äußeren Atmosphärendruck (P_{A}) und dem geringen Druck (P_{U}) im kühlmittelfreien Zwischenraum ausbildet.

Wie bereits zuvor erläutert, ist dieses drucklose Überlaufen der Kühlflüssigkeit baulich bedingt begrenzt, wodurch nur eine gewisse Druckdifferenz (ΔP) in der Kühlkammer 13 aufbaubar ist. Zur Erhöhung der Absenkung des geringeren Druckes (P_{U}) in der Kühlkammer 13 ist bei diesem Ausführungsbeispiel im Bereich der Ableitung 26 die Vorrichtung 34 zur Erzeugung eines zusätzlichen Unterdruckes angeordnet, welche durch eine in Abströmrichtung der Kühlflüssigkeit in der Ableitung 26 gerichtete zusätzliche Zufuhrleitung für ein weiteres Medium, bevorzugt jedoch die gleiche Kühlflüssigkeit, ausgebildet ist, um so ein erhöhtes Abströmen der Kühlflüssigkeit und damit verbunden einen Aufbau eines relativ gesehen niedrigeren Unterdruckes in der Ableitung 26 zu erzielen, wodurch im kühlmittelfreien Zwischenraum der Kühlkammer 13 ein noch geringer Unterdruck (P_{U}) aufbaubar ist. Diese Vorrichtung 34 kann beispielsweise eine Pumpe 39 umfassen, welche das zuführbare Medium unter einem vorbestimmbaren Druck in Strömungsrichtung in die Ableitung 26 einbringt, und so in Art einer Venturie-Anordnung einen Unterdruck aufbaut.

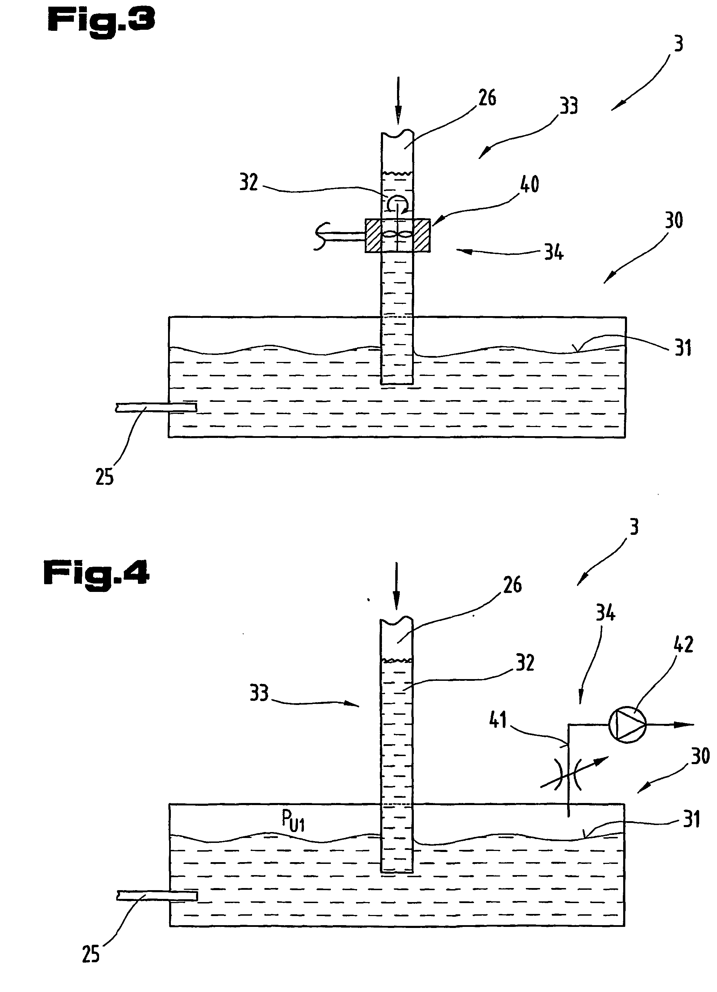

In der Fig. 3 ist eine weitere mögliche und gegebenenfalls für sich eigenständige Ausbildung der Vorrichtung 34 zur Erzeugung des Unterdrucks dargestellt, wobei hier der Einfachheit halber lediglich der Auffangbehälter 30 mit der darin einmündenden Ableitung 26 und dem im Auffangbehälter 30 ausgebildeten, weiteren Kühlmittelspiegel 31 dargestellt ist. Weiters ist in der Ableitung 26 noch vereinfacht die Kühlflüssigkeitssäule 32 gezeigt.

Die Vorrichtung 34 zur Erzeugung des Unterdruckes ist hier durch eine vereinfacht dargestellte Flügelradanordnung 40 ausgebildet, mit welcher wiederum die Abfließbewegung der aus der hier nicht näher dargestellten Kühlkammer 13 abfließenden Kühlflüssigkeit durch den aufgebauten Unterdruck verstärkt wird, wodurch wiederum im kühlmittelfreien Zwischenraum in der Kühlkammer 13 ein gegenüber dem äußeren Atmosphärendruck (P_{A}) geringerer Druck (P_{U}) aufgebaut werden kann, wie dies ohne dieser Vorrichtung 34 nicht möglich wäre. Auf eine Darstellung einer Antriebsvorrichtung wurde der Einfachheit halber verzichtet, wobei diese durch alle beliebigen aus dem Stand der Technik bekannten Baueinheiten gebildet sowie mit den unterschiedlichsten Energieformen betrieben werden kann.

In der Fig. 4 ist eine weitere mögliche Ausbildung der Vorrichtung 34 im Abfuhrbereich 33 der Kühlflüssigkeit zur Erzeugung eines Unterdruckes vereinfacht im Bereich des Auffangbehälters 30 dargestellt, wobei wiederum für gleiche Teile gleiche Bauteilbezeichnungen bzw. Bezugszeichen, wie in den vorangegangenen Fig. 1 bis 3, verwendet werden.

Die Ableitung 26 mündet wiederum unterhalb des im Auffangbehälter 30 ausgebildeten, weiteren Kühlmittelspiegels 31, wobei im Gegensatz zu den vorangegangenen Ausführungsbeispielen der Auffangbehälter 30 ebenfalls zum Aufbau auf einen gegenüber dem äußeren Atmosphärendruck (P_{A}) geringeren Druck (P_{U1}) absenkbar ausgebildet ist. Ähnlich wie bei der Kühlkammer 13 ist oberhalb des weiteren Kühlmittelspiegels 31 ein kühlmittelfreier Zwischenraum im Innenraum des Auffangbehälters 30 ausgebildet, in welchen eine eigene Absaugleitung 41 einmündet, welche mit zumindest einem Unterdruckerzeuger 42, beispielsweise einer Vakuumpumpe oder dgl., in Verbindung steht. Zur Festlegung des Druckes (P_{U1}) kann in der Absaugleitung 41 ein vereinfacht dargestelltes Drossel- bzw. Absperrorgan angeordnet sein. Selbstverständlich ist es aber auch möglich, die Absaugleitung 41 an einen zentralen Unterdruckerzeuger anzuschließen, wie dies aus dem allgemeinen Stand der Technik bekannt ist.

Je nach benötigtem Unterdruck (P_{U}) im kühlmittelfreien Zwischenraum der Kühlkammer 13, ist in Abhängigkeit von der Höhendistanz zwischen den beiden Kühlmittelspiegeln 22, 31 der Unterdruck (P_{U1}) im Auffangbehälter 30 derart einzustellen, dass die in der Ableitung 26 ausgebildete Kühlflüssigkeitssäule 32 eine Höhe erreicht, welche zwischen den beiden Kühlmittelspiegeln 22, 31 liegt. Damit ist wiederum ein druckloses Abfließen der Kühlflüssigkeit aus der bzw. den Kühlkammern 13 hin zum Auffangbehälter 30 möglich, wobei der erzielbare Unterdruck (P_{U}) in den Kühlkammern 13 höher gewählt werden kann, als dies ohne der Vorrichtung 34 zur Erzeugung des Unterdruckes im Abfuhrbereich 33 möglich wäre. Dadurch kann aufgrund der baulich begrenzten Abmessungen ein höherer Differenzdruck zwischen dem vom Gegenstand 5 umgrenzten Innenraum und dessen äußerer Oberfläche im Bereich der Kühlkammer 13 aufgebaut werden.

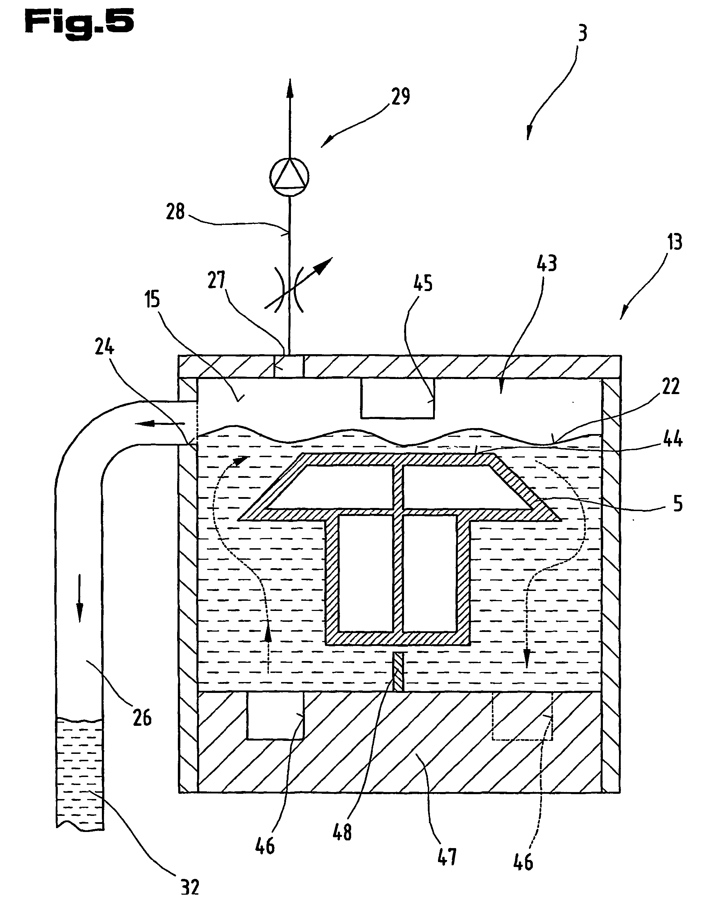

In der Fig. 5 ist ein Teilbereich der Kühlkammer 13 in einer vereinfacht schematisch dargestellten Ansicht gezeigt, wobei wiederum für gleiche Teile gleiche Bauteilbezeichnungen bzw. Bezugszeichen, wie in den vorangegangenen Fig. 1 bis 4 verwendet werden. Weiters wird, um unnötige Wiederholungen zu vermeiden, für die Ausbildung der Kühlkammer 13 der Kühleinrichtung 14 der Kalibriervorrichtung 8 bzw. der Formgebungseinrichtung 3 auf die Ausbildungen, wie diese in der DE 195 04 981 A1 der gleichen Anmelderin hingewiesen bzw. bezug genommen. Für die spezielle Ausbildung der Kühlkammer 13, insbesondere deren Gehäuse, bestehend aus der Bodenplatte, der Deckplatte, den Seitenwänden, den Stirnwänden, den Kaliberblenden bzw. Stützblenden, der Trennwände, dem Längssteg, der Anordnung der Durchströmkanäle bzw. Durchströmöffnungen sowie der Ausbildung der einzelnen Bereiche bzw. der Umspülung des abzukühlenden Gegenstandes 5 und dem damit verbundenen Vakuumaufbau innerhalb der Kühlkammer 13 wird auf die DE 195 04 981 A1 bezug genommen und diese Offenbarung in die vorliegende Anmeldung übernommen.

Die hier dargestellte Kaliberplatte 15 begrenzt im vorliegenden Ausführungsbeispiel die unmittelbar hintereinander angeordneten Bereiche 43 zwischen diesen nahezu vollständig bis auf vorgesehene Öffnungen, um einen Weitertransport der Kühlflüssigkeit zwischen der Zufuhr- und Abfuhröffnung 23, 24 sowie einem entsprechenden Unterdruckaufbau im kühlmittelfreien Zwischenraum oberhalb des Kühlmittelspiegels 22 zu ermöglichen.

Wie bereits zuvor beschrieben, ist die Abfuhröffnung 24 mit der daran anschließenden Ableitung 26 in vertikaler Richtung in bezug zu einer den Gegenstand 5 obersten Begrenzenden 44 derart in der Kühlkammer 13 angeordnet, dass der Kühlmittelspiegel 22 zumindest gleich, bevorzugt höher, angeordnet ist, als die oberste Begrenzende 44 des Gegenstandes 5. Um einen kontinuierlichen Vakuumaufbau ausgehend vom ersten, dem Eintrittsbereich 35 - siehe Fig. 2 - angeordneten Bereich 43 hin zu dem dem Austrittsbereich 36 - siehe Fig. 2 - zugewandten Bereich 43 zu ermöglichen, ist im kühlmittelfreien Zwischenraum in der Kaliberplatte 15 oberhalb des Kühlmittelspiegels 22 ein Durchbruch 45 angeordnet, durch welchen in bekannter Weise in Abhängigkeit von seinem Durchströmquerschnitt ein stetig zunehmender Vakuumaufbau zwischen den einzelnen, hintereinander angeordneten Bereichen 43 und damit verbunden der Weitertransport der Kühlflüssigkeit zwischen den einzelnen Bereichen 43 bewirkt wird. Das Umströmen des Gegenstandes 5 erfolgt entweder durch entsprechend angeordnete Durchströmöffnungen 46 in einer Bodenplatte 47 und/oder den Kaliberplatten 15. Durch die entsprechende, in bezug zu einem Längssteg 48 in Extrusionsrichtung 6 wechselweise versetzte Anordnung derselben ist ein wechselweises Umströmen in jeweils zueinander entgegengesetzter Richtung in den einzelnen hintereinander angeordneten Bereichen 43 möglich, wie dies bereits ausführlich in der DE 195 04 981 1A beschrieben worden ist.

Gleichfalls ist auch noch vereinfacht im Bereich der Deckplatte die Absaugöffnung 27 mit der daran anschließenden Saugleitung 28 sowie dem Unterdruckerzeuger 29 vereinfacht dargestellt. Die hier nicht dargestellte Anordnung der Vorrichtung 34 zur Erzeugung eines weiteren Unterdruckes, welcher zum Aufbau einer größeren Druckdifferenz (ΔP) zwischen dem kühlmittelfreien Zwischenraum und dem äußeren Atmosphärendruck (P_{A}) dient, ist auch zum Weitertransport der Kühlflüssigkeit und der damit verbundenen wechselweisen Umströmung des Gegenstandes 5 erforderlich.

Vorteilhaft ist bei all den zuvor beschriebenen Ausführungsformen, wenn die Ableitung 26 zumindest bereichsweise durchsichtig bzw. aus einem durchsichtigen Werkstoff gebildet ist, um so einen Einblick hin zur Kühlflüssigkeitssäule 32 zu ermöglichen. Dadurch kann eine einfache Kontrolle des Verfahrensablaufes, insbesondere dem ordnungsgemäßen Unterdruckaufbau in den Kühlkammern 13, erfolgen.

In der Fig. 2 ist noch weiters vereinfacht dargestellt, dass im Bereich der Ableitung 26 aus der Kühlkammer 13 der Kühleinrichtung 14 dieser mindestens eine Erfassungseinrichtung 49 zur Überwachung der darin aufgebauten Kühlflüssigkeitssäule 32 zugeordnet sein kann. Diese Erfassungseinrichtung 49 kann beispielsweise durch einen oder mehren Sensoren 50 gebildet sein, mit welchem oder welchen das obere Ende der Kühlflüssigkeitssäule 32, insbesondere ein durch diese ausgebildeter Kühlmittelspiegel 51 in seiner relativen vorbestimmbaren Lage zwischen den beiden Kühlmittelspiegeln 22 und 31 ermittelt werden kann. Dabei kann die Ermittlung bzw. Erfassung derart gewählt sein, dass diese nur auf ein vorbestimmbares Niveau oder auf einen vorbestimmbaren Bereich zwischen einem Höchstwert und einem Tiefstwert ausgelegt ist.

Die Erfassungseinrichtung 49 ist über eine oder mehrere Leitungen 52 mit einer schematisch vereinfacht dargestellten Steuereinrichtung 53 verbunden, welche ihrerseits mit der Vorrichtung 34 zur Erzeugung des Unterdruckes über eine oder mehrere Leitungen 54 verbunden ist. Dadurch ist es nunmehr möglich, aufgrund des in der Ableitung 26 ermittelten Kühlmittelspiegels 51 die Vorrichtung 34 zur Erzeugung des Unterdruckes derart anzusteuern bzw. zu Regeln, dass infolge des in der Kühlkammer 13 im kühlmittelfreien Zwischenraum aufgebauten Unterdruckes die Kühlflüssigkeitssäule 32 mit ihrem Kühlmittelspiegel 51 auf einem vorbestimmbaren Niveau bzw. einem vorbestimmbaren Niveaubereich konstant gehalten werden kann. Damit ist ein einwandfrei funktionierender Unterdruckaufbau und somit verbunden ein stetes Überlaufen der durch die Zufuhröffnung 23 zugeführten und durch die Abfuhröffnung abgeführten Kühlflüssigkeit aus der Kühlkammer 13 sichergestellt.

Die Erfassungseinrichtung 49 kann beispielsweise aber auch durch einen Schwimmschalter oder ähnliches gebildet sein, der direkt, ohne jeglicher Zwischenschaltung der Steuereinrichtung 53, mit der Vorrichtung 34 zur Erzeugung des Unterdruckes verbunden ist, und diese je nach Bedarf in bzw. außer Betrieb setzt.

An dieser Stelle sei noch erwähnt, dass die zuvor beschriebene Erfassungseinrichtung 49 sowie gegebenenfalls die Steuereinrichtung 53 auch selbstverständlich bei den weiteren, in den Fig. 3 bis 5 dargestellten Ausführungsformen Anwendung finden kann, ohne dass diese dort ausdrücklich dargestellt oder beschrieben worden sind.

Der Ordnung halber sei abschließend darauf hingewiesen, dass zum besseren Verständnis des Aufbaus Formgebungseinrichtung diese bzw. deren Bestandteile teilweise unmaßstäblich und/oder vergrößert und/oder verkleinert dargestellt wurden.

### Bezugszeichenaufstellung

- 1: Extrusionsanlage
- 2: Extruder
- 3: Formgebungseinrichtung
- 4: Raupenabzug
- 5: Gegenstand

- 6: Extrusionsrichtung
- 7: Extrusionswerkzeug
- 8: Kalibriervorrichtung
- 9: Kalibrierwerkzeug
- 10: Kalibrierwerkzeug

- 11: Kalibrierwerkzeug
- 12: Kalibrierwerkzeug
- 13: Kühlkammer
- 14: Kühleinrichtung
- 15: Kaliberblende

- 16: Aufnahmebehälter
- 17: Maschinenbett
- 18: Aufstandsfläche
- 19: Kalibriertisch
- 20: Laufrolle

- 21: Fahrschiene
- 22: Kühlmittelspiegel
- 23: Zufuhröffnung
- 24: Abfuhröffnung
- 25: Zuleitung

- 26: Ableitung
- 27: Absaugöffnung
- 28: Saugleitung
- 29: Unterdruckerzeuger
- 30: Auffangbehälter

- 31: Kühlmittelspiegel
- 32: Kühlflüssigkeitssäule
- 33: Abfuhrbereich
- 34: Vorrichtung
- 35: Eintrittsbereich

- 36: Austrittsbereich
- 37: Pumpe
- 38: Kühlvorrichtung
- 39: Pumpe
- 40: Flügelradanordnung

- 41: Absaugleitung
- 42: Unterdruckerzeuger
- 43: Bereich
- 44: Begrenzende
- 45: Durchbruch

- 46: Durchströmöffnung
- 47: Bodenplatte
- 48: Längssteg
- 49: Erfassungseinrichtung
- 50: Sensor

- 51: Kühlmittelspiegel
- 52: Leitung
- 53: Steuereinrichtung
- 54: Leitung

## Patentansprüche

1. Kühleinrichtung (14) für eine Extrusionsanlage (1) mit zumindest einer Kühlkammer (13), die einen Innenraum umgrenzt und zur Aufnahme einer Kühlflüssigkeit ausgebildet ist, die einen ersten Kühlmittelspiegel (22) bildet und in deren Innenraum gegebenenfalls mindestens eine Kaliberblende (15) angeordnet ist, die mindestens einen Durchbruch zum Hindurchführen mindestens eines länglichen Gegenstandes (5) aufweist, mit mindestens je einer Zu- und Abfuhröffnung (23, 24) für die Kühlflüssigkeit, die in den Innenraum mündet und mit mindestens je einer Zu- und Ableitung (25, 26) in Strömungsverbindung stehen, wobei mindestens eine Abfuhröffnung (24) auf dem Niveau des Kühlmittelspiegels (22) angeordnet ist, mit einer Absaugöffnung (27), die oberhalb des Kühlmittelspiegels (22) in einen kühlmittelfreien Zwischenraum des Innenraums der Kühlkammer (13) mündet und über die der Zwischenraum auf einen gegenüber dem äußeren Atmosphärendruck (P_{A}) geringeren Druck (P_{U}) absenkbar ist, mit einem Auffangbehälter (30) für die Kühlflüssigkeit, der über die Ableitung (26) und die Abfuhröffnung (24) mit dem kühlmittelfreien Zwischenraum verbunden ist, und die Kühlflüssigkeit im Auffangbehälter (30) einen unterhalb des ersten Kühlmittelspiegels (22) in der Kühlkammer (13) angeordneten, weiteren Kühlmittelspiegel (31) ausbildet, wobei die Ableitung (26) unterhalb des weiteren Kühlmittelspiegels (31) endet, und die Kühlflüssigkeit in der Ableitung (26) in Abhängigkeit der Differenz der beiden auf die jeweiligen Kühlmittelspiegel (22, 31) ausgeübten Drücke (ΔP) eine Kühlflüssigkeitssäule (32) ausbildet, **dadurch gekennzeichnet, dass** in einem Abfuhrbereich (33) der Kühlflüssigkeit eine Vorrichtung (34) zur Erzeugung eines Unterdruckes angeordnet ist.

2. Kühleinrichtung nach Anspruch 1, **dadurch gekennzeichnet, dass** die Vorrichtung (34) durch eine in der Ableitung (26) angeordnete Venturie-Anordnung gebildet ist.

3. Kühleinrichtung nach Anspruch 1 oder 2, **dadurch gekennzeichnet, dass** die Vorrichtung (34) durch eine in der Ableitung (26) angeordnete Flügelradanordnung (40) gebildet ist.

4. Kühleinrichtung nach einem oder mehreren der vorhergehenden Ansprüche, **dadurch gekennzeichnet, dass** ein Innenraum des Auffangbehälters (30) auf einen gegenüber dem äußeren Atmosphärendruck (P_{A}) geringeren Druck (P_{U1}) absenkbar ausgebildet ist.

5. Kühleinrichtung nach Anspruch 4, **dadurch gekennzeichnet, dass** der im Innenraum geringere Druck (P_{U1}) zumindest gleich, bevorzugt jedoch relativ höher ist als der im Innenraum der Kühlkammer (13) herrschende geringere Druck (P_{U}).

6. Kühleinrichtung nach einem oder mehreren der vorhergehenden Ansprüche, **dadurch gekennzeichnet, dass** der Ableitung (26) mindestens eine Erfassungseinrichtung (49) zur Überwachung der darin aufgebauten Kühlflüssigkeitssäule (32) zugeordnet ist.

7. Kühleinrichtung nach Anspruch 6, **dadurch gekennzeichnet, dass** die Erfassungseinrichtung (49) mit einer Steuereinrichtung (53) verbunden ist, welche ihrerseits mit der Vorrichtung (34) zur Erzeugung des Unterdruckes verbunden ist.

8. Kühleinrichtung nach einem oder mehreren der vorhergehenden Ansprüche, **dadurch gekennzeichnet, dass** der Kühlmittelspiegel (22) in der Kühlkammer (13) in vertikaler Richtung oberhalb einer den Gegenstand (5) obersten Begrenzenden (44) angeordnet ist.

9. Kühleinrichtung nach einem oder mehreren der vorhergehenden Ansprüche, **dadurch gekennzeichnet, dass** die in Extrusionsrichtung (6) durch die Kaliberblenden (15) unterteilten, hintereinander angeordneten Bereiche (43) des Innenraums der Kühlkammer (13) über zumindest einen im kühlmittelfreien Zwischenraum angeordneten Durchbruch (45) sowie zumindest eine im Bereich unterhalb des ersten Kühlmittelspiegels (22) angeordnete Durchströmöffnung (46) miteinander in Strömungsverbindung stehen.

10. Kühleinrichtung nach einem oder mehreren der vorhergehenden Ansprüche, **dadurch gekennzeichnet, dass** die Ableitung (26) zumindest bereichsweise durchsichtig bzw. aus einem durchsichtigen Werkstoff gebildet ist.

## Claims

1. Cooling system (14) for an extrusion plant (1) with at least one cooling chamber (13) surrounding an interior and designed to accommodate a cooling fluid which assumes a first coolant level (22) and in the interior of which at least one calibration plate (15) is disposed, incorporating at least one orifice through which at least one elongate object (5) is fed, with at least an inlet and outlet orifice (23, 24) respectively for the cooling fluid which open into the interior and have a flow connection to at least an inlet and outlet line (25, 26) respectively, at least one outlet orifice (24) being disposed on a level with the coolant level (22), having a suction orifice (27) which opens into a coolant-free intermediate space of the cooling chamber (13) above the coolant level (22) and by means of which the intermediate space can be reduced to a pressure (P_{U}) below the outside atmospheric pressure (P_{A}), with a catchment container (30) for the cooling fluid which is connected via the outlet line (26) and the outlet orifice (24) to the coolant-free intermediate space, and the cooling fluid in the catchment container (30) is at a different coolant level (31) below the first coolant level (22) in the cooling chamber (13), the outlet line (26) terminating below the other coolant level (31), and the cooling fluid in the outlet line (26) forms a cooling fluid head (32) depending on the difference between the two pressures (ΔP) applied at the respective coolant levels (22, 31), **characterised in that** a device (34) for generating a negative pressure is disposed in the outlet region (33) of the cooling fluid.

2. Cooling system as claimed in claim 1, **characterised in that** the device (34) is provided in the form of a Venturi arrangement disposed in the outlet line (26).

3. Cooling system as claimed in claim 1 or 2, **characterised in that** the device (34) is provided in the form of a vane wheel arrangement (40) disposed in the outlet line (26).

4. Cooling system as claimed in one or more of the preceding claims, **characterised in that** an interior of the catchment container (30) is designed so that it can be reduced to a pressure (P_{U1}) that is lower than the outside atmospheric pressure (P_{A}).

5. Cooling system as claimed in claim 4, **characterised in that** the lower pressure (P_{U1}) in the interior is at least the same as but preferably relatively higher than the lower pressure (P_{U}) prevailing in the interior of the cooling chamber (13).

6. Cooling system as claimed in one or more of the preceding claims, **characterised in that** the outlet line (26) is provided with at least one detection unit (49) for monitoring the cooling fluid head (32) generated therein.

7. Cooling system as claimed in claim 6, **characterised in that** the detection unit (49) is connected to a control unit (53), which is in turn connected to the device (34) for generating the negative pressure.

8. Cooling system as claimed in one or more of the preceding claims, **characterised in that** the coolant level (22) in the cooling chamber (13) is disposed above an uppermost delimiting contour (44) of the object (5).

9. Cooling system as claimed in one or more of the preceding claims, **characterised in that** the regions (43) of the interior of the cooling chamber (13) disposed one after the other in the extrusion direction (6) and sub-divided by the calibration plates (15) are interconnected with one another by means of at least one orifice (45) disposed in the coolant-free intermediate space as well as at least one flow orifice (46) disposed in the region below the first coolant level (22).

10. Cooling system as claimed in one or more of the preceding claims, **characterised in that** the outlet line (26) is made from a material that is transparent in at least certain regions or is transparent.

## Revendications

1. Système de refroidissement (14) pour une installation d'extrusion (1) avec au moins une chambre de refroidissement (13) qui entoure un espace intérieur et qui est réalisée pour la réception d'un liquide de refroidissement, qui forme un premier niveau d'agent de refroidissement (22) et dans l'espace intérieur de laquelle est disposé le cas échéant au moins un obturateur de calibrage (15) qui présente au moins un perçage pour le passage d'au moins un objet oblong (5), avec au moins respectivement une ouverture d'amenée et d'évacuation (23, 24) pour le liquide de refroidissement, qui débouche dans l'espace intérieur et qui sont en liaison d'écoulement avec au moins respectivement un conduit d'amenée et d'évacuation (25, 26), où au moins une ouverture d'évacuation (24) est disposée au niveau de l'agent de refroidissement (22), avec une ouverture d'aspiration (27) qui débouche au-dessus du niveau d'agent de refroidissement (22) dans un espace intermédiaire exempt d'agent de refroidissement de l'espace intérieur de la chambre de refroidissement (13) et par laquelle l'espace intermédiaire peut être abaissé à une pression (P_{U}) plus basse par rapport à la pression atmosphérique extérieure (P_{A}), avec un récipient de recueillement (30) du liquide de refroidissement qui est relié par l'évacuation (26) et l'ouverture d'évacuation (24) à l'espace intermédiaire exempt d'agent de refroidissement, et le liquide de refroidissement forme dans le récipient de recueillement (30) un autre niveau d'agent de refroidissement (31) disposé en dessous du premier niveau d'agent de refroidissement (22) dans la chambre de refroidissement (13), où l'évacuation (26) se termine en dessous de l'autre niveau d'agent de refroidissement (31), et le liquide de refroidissement dans l'évacuation (26), en fonction de la différence des deux pressions (ΔP) exercées sur les niveaux d'agents de refroidissement respectifs (22, 31) forme une colonne de liquide de refroidissement (32), **caractérisé en ce qu'**il est disposé dans une zone d'évacuation (33) du liquide de refroidissement un dispositif (34) pour la génération d'une dépression.

2. Système de refroidissement selon la revendication 1, **caractérisé en ce que** le dispositif (34) est formé par un agencement Venturi disposé dans l'évacuation (26).

3. Système de refroidissement selon la revendication 1 ou 2, **caractérisé en ce que** le dispositif (34) est formé par un agencement de roue à ailettes (40) disposé dans l'évacuation (26).

4. Système de refroidissement selon l'une ou plusieurs des revendications précédentes, **caractérisé en ce qu'**un espace intérieur du récipient de recueillement (30) est réalisé pour pouvoir être abaissé à une pression (P_{U1}) plus basse par rapport à la pression atmosphérique extérieure (P_{A}).

5. Système de refroidissement selon la revendication 4, **caractérisé en ce que** la pression (P_{U1}) plus basse dans l'espace intérieur est au moins égale, de préférence cependant relativement plus élevée que la pression plus basse (P_{U}) régnant dans l'espace intérieur de la chambre de refroidissement (13).

6. Système de refroidissement selon l'une ou plusieurs des revendications précédentes, **caractérisé en ce qu'**il est associé à l'évacuation (26) au moins un dispositif de détection (49) pour surveiller la colonne de liquide de refroidissement (32) formée dans celle-ci.

7. Système de refroidissement selon la revendication 6, **caractérisé en ce que** le dispositif de détection (49) est relié à un dispositif de commande (53) qui est relié à son tour au dispositif (34) pour la génération de la dépression.

8. Système de refroidissement selon l'une ou plusieurs des revendications précédentes, **caractérisé en ce que** le niveau d'agent de refroidissement (22) dans la chambre de refroidissement (13) est disposé dans la direction verticale au-dessus d'une limitation supérieure (44) de l'objet (5).

9. Système de refroidissement selon l'une ou plusieurs des revendications précédentes, **caractérisé en ce que** les zones (43) disposées les unes derrière les autres, divisées dans la direction d'extrusion (6) par les obturateurs de calibrage (15) de l'espace intérieur de la chambre de refroidissement (13) sont en liaison d'écoulement les unes avec les autres par au moins un perçage (45) ménagé dans l'espace intermédiaire exempt d'agent de refroidissement et par au moins une ouverture d'écoulement traversante (46) disposée dans la zone en dessous du premier niveau d'agent de refroidissement (22).

10. Système de refroidissement selon l'une ou plusieurs des revendications précédentes, **caractérisé en ce que** l'évacuation (26) est réalisée au moins par zone d'une manière transparente respectivement en un matériau transparent.
